Europäisches Patentamt

(19) European Patent Office

Office européen des brevets

(11) Publication number: **0 176 360**
**A2**

(12) # EUROPEAN PATENT APPLICATION

(21) Application number: **85306820.3**

(51) Int. Cl.⁴: **H 04 N 11/00**

(22) Date of filing: **25.09.85**

(30) Priority: **25.09.84 US 654381**

(43) Date of publication of application:
**02.04.86 Bulletin 86/14**

(84) Designated Contracting States:
**DE FR GB IT**

(71) Applicant: **High Resolution Television, Inc.**
**7554 Sunset Boulevard**
**Los Angeles California 90046(US)**

(72) Inventor: **Phelps, Arthur C.**
**4428 Franklin Avenue**
**Hollywood CA 90027(US)**

(74) Representative: **Tomlinson, Kerry John et al,**
**Frank B. Dehn & Co. European Patent Attorneys Imperial**
**House 15-19 Kingsway**
**London WC2B 6UZ(GB)**

(54) **Narrow band high resolution television.**

(57) High resolution television (HRT) information in the luminance signal Y of a composite video signal Y, I, Q, provided by vertically modulating the scan line at a high frequency (7.2 MHz) is synchronously detected (50) before transmittal to a display unit, modulated (52) at a lower frequency (1.2 MHz) within the bandwidth of the I signal at the phase of the Q signal, and added (56) to the Q signal before transmittal. At the display unit, the high resolution information signal is synchronously detected and then remodulated at the same frequency and phase as the modulation of the scan at the signal source before it is added back into the luminance signal Y for display.

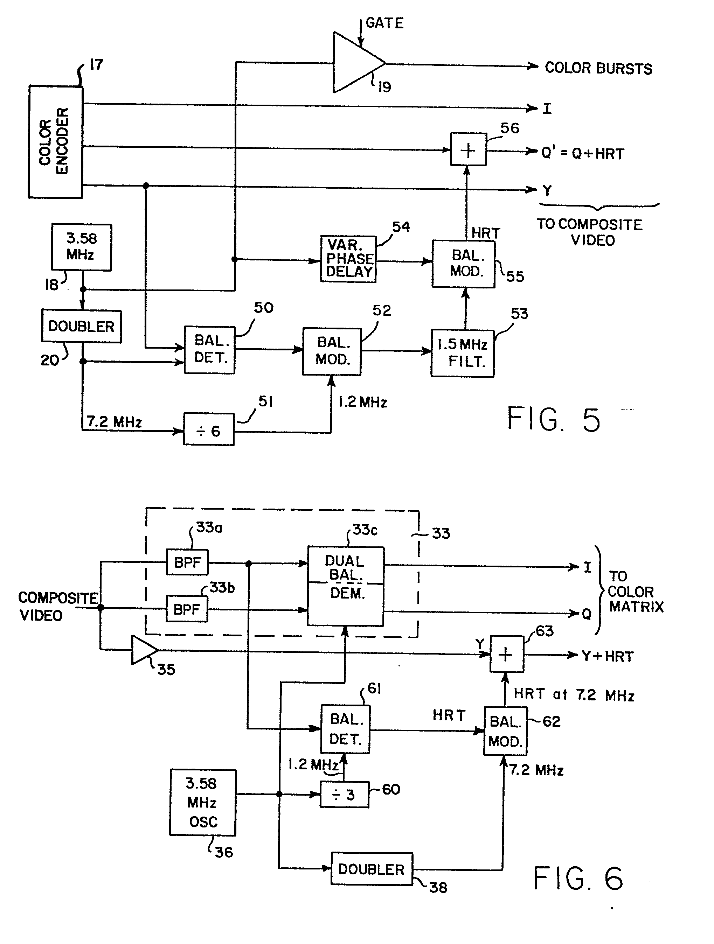

. FIG. 5

## NARROW BAND HIGH RESOLUTION TELEVISION

### BACKGROUND OF THE INVENTION

This invention relates to television, and more particularly to a method and apparatus for improving the quality of television reproduction in broadcast and recorded television programs.

In a television picture, there are two independent resolution factors, namely horizontal resolution, which depends largely upon system bandwidth, and vertical resolution, which depends largely upon the number of active scanning lines in a frame. Various techniques have been employed to increase horizontal resolution. For example, although the video bandwidth is limited to about 4 MHz, the video signal may be processed by a studio with twice the bandwidth of the transmitter on the theory that the better the picture into the transmitter, the better the picture at the receiver. But vertical resolution has, in the past, remained limited by the number of active scanning lines.

In the United States, the National Television Systems Committee (NTSC) has prescribed as a standard the total number of scanning lines of 525 divided into two interlaced fields. This number is significantly reduced to about 485 active scanning lines by the necessary vertical blanking time (approximately 7.5 percent of the total time for scanning 525 lines). Other factors may further degrade horizontal resolution, such as scanning spot size. It would be possible to increase vertical resolution by doubling the number of active scanning lines and decreasing the spot size, but that would reduce the horizontal resolution for a given bandwidth and frame rate. The problem is to increase vertical resolution without deviating from the NTSC standard of 525 lines. The problem exists as to other standards adopted in other parts of the world, such as PAL and SECAM, since any finite number of prescribed lines less than 1000 limits the vertical resolution to substantially less than the horizontal resolution.

We have proposed in EP-A-0091765 to increase vertical resolution for standard television by modulating the vertical scan axis (deflection) of a television camera at a multiple of the color carrier, for example, twice the color carrier frequency of 3.579545 MHz, such that each active scanning line traverses an undulatory path rather than a straight line, i.e., oscillates about the normal scan line. The amplitude of the modulation is preferably sufficient for interlaced lines of a frame to intrude the area of adjacent lines, which is modulation with an amplitude equal to plus and minus one half line spacing of the interlaced fields above and below the center of the spot on the normal scan line. The video signal thus produced by actually scanning areas above and below the normal scan lines is then transmitted just as for the normal scanning lines, which can be within the vestigial bandwidth limit of about 4.2 MHz for NTSC broadcast transmission, but with loss of the high resolution information in the signal transmitted. A wider bandwidth of about 8 MHz or more will preserve the high resolution information.

## SUMMARY OF THE INVENTION

In accordance with the present invention, virtually all of the potential increase in vertical resolution of the aforesaid high resolution television system is preserved in the composite video (Y, I, Q) transmitted within the narrow color subcarrier sidebands of about 3.6 MHz by synchronously detecting high resolution television (HRT) information in the luminance (Y) signal at the vertical scan modulation frequency, and modulating the HRT information with a signal at some predetermined fraction of the vertical scan modulation frequency that is well within the narrow vestigial bandwidth, of the broadcast signal such as one sixth (1.1931816 MHz) of the modulation frequency of twice the color carrier frequency of 3.57945 MHz. The high resolution information on the Y signal is thus synchronously detected and then modulated at a lower frequency ($\simeq$ 1.2 MHz) that is above the color carrier frequency band of the Q signal which is 0.5 MHz and in phase with the Q signal so as to be distinct from the I signal in phase and distinct from the Q signal in frequency. The Y signal modulated with the HRT information (the vertically modulated scan information present in the composite video signal to be transmitted) is bandpass filtered to assure that the vestigial sideband of the video is within 4.2 MHz. That filtering removes the HRT information on the Y signal, but this same HRT information on the lower carrier frequency of 1.2 MHz can be transmitted along with the bandpass limited I and Q signals.

At the receiver, the color demodulator is not affected by the HRT information modulated at the same bandwidth (≃1.2 MHz) as the I signal but in phase with the Q signal. The I and Q signals, and the high resolution information modulated at 1.2 MHz, are separated by a bandpass filter and applied to a balanced demodulator using a 3.58 MHz reference frequency synchronized with the color carrier. At the input of the demodulator, the composite signal is bandpass limited so that the Q and I signals are applied to the demodulator separately for demodulating and then converting through a matrix to red, green and blue signals (R, G, B). The high resolution information at the output of the I bandpass amplifier is then synchronously detected using the same frequency and phase as used for modulating the high resolution information signal at 1.2 MHz at the transmitter. The high resolution information signal thus detected at the receiver is then modulated at the same frequency and phase as used in modulating the vertical scan at the television camera, and added to the Y signal. In that manner, the high resolution information of the composite video signal produced by the camera at the high vertical scan frequency, but transmitted at the lower frequency of 1.2 MHz in the Q channel, is displayed at the receiver.

Although reference to a broadcast transmitter and receiver is made for convenience, it is evident that the underlying concept of the invention is applicable to other systems, such as closed circuit transmission to monitors, or recording on tape from a camera, or film to tape transfer for later playback into a receiver, either directly or through a broadcast transmitter, and to large screen television display systems. Consequently, it is intended that the claims be interpreted to cover any such applications where there is bandpass limiting of the composite color video in the transmission channel between the video signal source and the display unit. However, the concept will best be understood from the following description of a system that contemplates broadcast transmission to a receiver when read in connection with the drawings.

BRIEF DESCRIPTION OF THE DRAWINGS

FIG. 1 illustrates schematically that part of a color television camera embodying the basic high resolution television system of the aforesaid patent application.

FIG. 2 illustrates schematically that part of a color television receiver embodying the basic high resolution television system of the aforesaid patent application.

FIG. 3 illustrates schematically the straight parallel scan lines of conventional television scanning and display.

FIG. 4 illustrates schematically the undulating parallel scan lines of the aforesaid basic high resolution television system which increases vertical resolution.

FIG. 5 illustrates schematically the implementation of the present invention at the point of preparing a composite color video signal for transmission.

FIG. 6 illustrates schematically the implementation of the present invention at the point of preparing a composite color video signal for display.

**0176360**

DESCRIPTION OF PREFERRED EMBODIMENTS

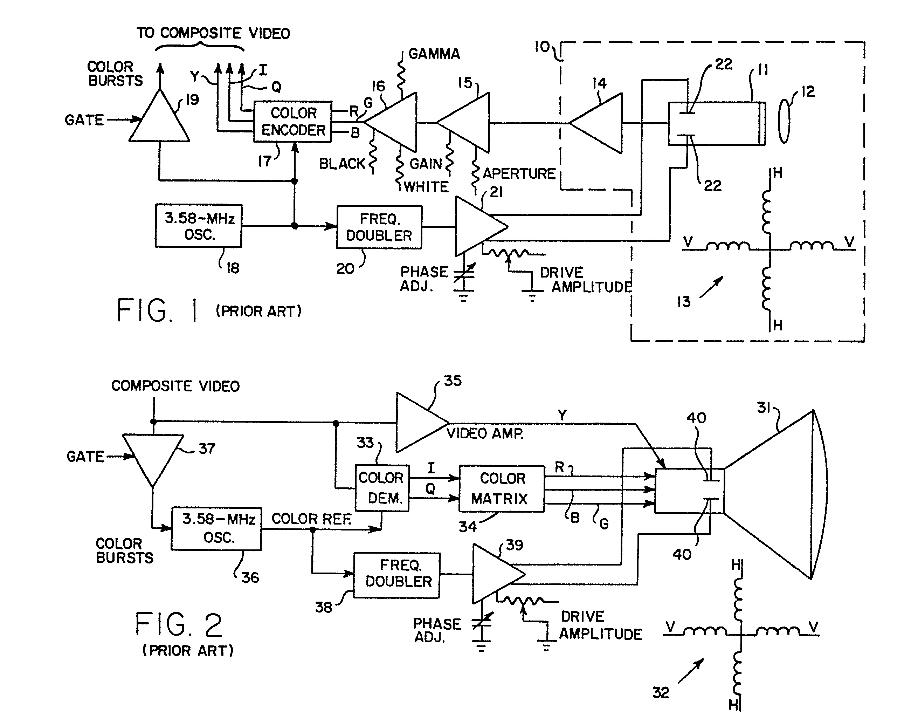

Referring to the drawings, FIG. 1 illustrates schematically those portions of a color television camera necessary for an understanding of the present invention which include a camera head 10 having a pickup tube 11, lens 12, and deflection yoke 13 for vertical and horizontal deflection of the electron scanning beam. The camera head is controlled by a unit (not shown) which provides the horizontal (H) and vertical (V) drive as well as blanking pulses in the usual manner. The video signal from the pickup tube 11 having a scanning yoke 13 is processed through a preamplifier 14, a video amplifier 15 (where the aperture and gain are set) and a processing amplifier 16 (where the black level, white level and Gamma are set).

The camera head 10 is shown with only one pickup tube 11, whereas for color television, three pickup tubes are used to scan the scene received through separate lenses and color filters that separate the red (R), blue (B), and green (G) light. Luminance is derived from the color primary signals R, G and B as a separate signal (Y) through a matrix assumed to be part of a color encoder 17. The one pickup tube shown is the green pickup tube. It may be unnecessary to modulate the vertical scan of the other pickup tubes since the high resolution information desired from the vertical scan modulation is present in the green tube which makes the greatest contribution to the luminance signal Y derived from the matrix according to the following equation:

$$Y = 0.30R + 0.59G + 0.11B$$

The color encoder matrix implements the following equations:

$$I = 0.68R - 0.28G - 0.32B$$

$$Q = 0.21R - 0.52G + 0.31B$$

The color encoder also modulates the I and Q signals with a color subcarrier at 3,579,545 Hz (hereinafter 3.58 MHz) from a stable oscillator 18 with a 90° phase difference between the I and the Q signals.

The encoded color signals I and Q, and the luminance signal Y, are combined and applied to the television transmitter and/or monitor. Although the chrominance subcarrier per se is not transmitted, gated color subcarrier bursts are transmitted through a gated amplifier 19 during horizontal blanking periods for use in synchronizing the frequency and phase of a color reference oscillator at the receiver.

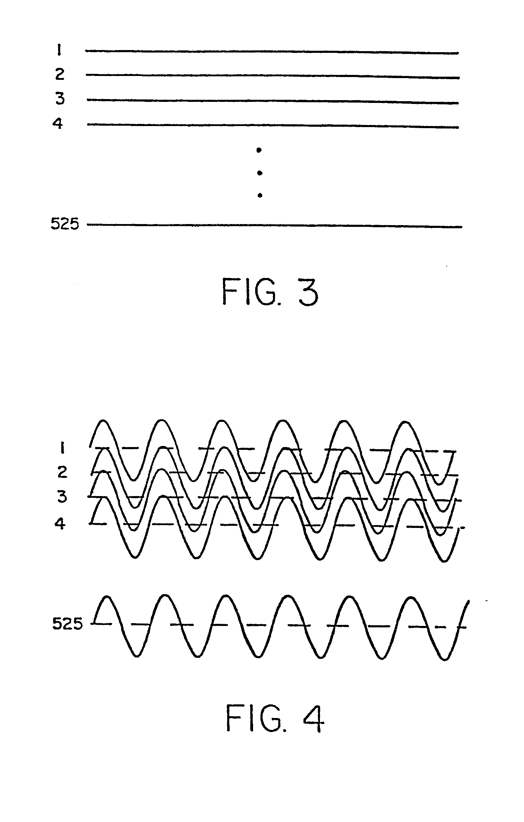

The essence of the basic high resolution television system described in the aforesaid patent application is to use the output of the color subcarrier oscillator 18 at the camera to modulate the vertical deflection of the green pickup tube during its 525 scan lines using a modulation frequency derived from the color oscillator 18 by a frequency doubler 20 through a driver 21 and electrostatic deflection plates 22 in the tube 11, or equivalent auxiliary deflection coils located between the yoke 13 and tube 11. The normal (unmodulated) scan follows a pattern shown in FIG. 3. In actuality, the lines are sloped downwardly from left to right as the vertical scan continues to move the beam from the top to the bottom for one field of 262.5 lines. The return (while the beam is blanked) is at a much greater rate than the scan, so that what is shown in FIG. 3 more nearly represents the return path for the blanked beam, but for the purpose of describing the basic HRT system, it may be assumed that the scan lines are exactly horizontal (as indeed they appear to the viewer). The modulation superimposed on adjacent lines from two fields of a frame is then shown in FIG. 4. Because the modulated scan lines are not straight lines, each modulated line includes more information (pixels). In other words, 525 lines cover more area in the entire scene to increase the vertical resolution by about two or more times, depending upon the amplitude of modulation, the beam spot size and bandwidth of the video signal transmitted to the display unit. This greater amount of information is referred to herein as high resolution television (HRT) information. It consists of information at 7.2 MHz and its harmonics.

Another significant benefit of this vertical scan modulation technique is that the scan, no longer a straight line, cannot be parallel to lines in the scene being televised, such as stripes in fabric. As a consequence, vertical aliasing is virtually eliminated over most of the scene. The amount of vertical aliasing eliminated depends upon the relationship of the depth of modulation of the tube at the scan line modulation rate. If maximum, there will be maximum elimination of vertical aliasing.

The literature speaks of the scan rate as 15,750 lines/sec for convenience, just as it does of the chrominance subcarrier as 3.58 MHz, but in actuality the number of lines scanned per second are 15,734.26374. Dividing that number of lines into 3,579,545 Hz yields 227.50000 cycles of modulation per scan line so the modulation pattern would repeat itself **out of phase** on every successive line of a field. It is desirable to have the same scanning pattern repeat itself **in phase** for every line of both fields of a frame. This could be achieved by inverting the modulating 3.58 MHz signal during every other line using the blanking signals to control logic for this phase inversion, but the mathematics of the NTSC standard is fortuitous in that, by doubling the modulating frequency in the frequency doubler 20, there will be 455.00000 cycles of modulation in every line scanned by the camera, and the higher frequency of modulation will increase the number of pixels included in each line scan, thereby increasing vertical resolution even more while also increasing horizontal resolution. Whether a scan line starts with a modulation of phase zero is not important; what is important is only that substantially the same modulation phase be maintained from line to line. Notwithstanding that, a phase adjustment as well as an amplitude adjustment for half line spacing modulation can be made at the driver 21, if desired.

FIG. 2 illustrates schematically those portions of a display unit (color television receiver or monitor) which are necessary for an understanding of the receiver end of the HRT system. Basically, the display unit is comprised of a picture tube (CRT) 31 and deflection yoke 32. The deflection yoke receives the normal horizontal (H) and vertical (V)·drive signals to scan 525 lines in two interlaced fields of 262.5 lines. (The CRT also receives the normal line and frame blanking pulses during beam retrace periods, not shown.) The composite color video is passed through a color demodulator 33 and color matrix 34 for demodulating the encoded color signals I and Q and converting those signals into fundamental color signals (R, B and G). The luminance signal (Y) is passed by a video amplifier 35 to the picture tube for control of brightness.

For the color demodulation in the display unit, a color reference oscillator 36 tuned to precisely 3,579,545 Hz is synchronized by the gated color subcarrier bursts received via a gated amplifier 37 during each horizontal sync pulse, i.e., during each line blanking period. In that way, color demodulation (decoding) is synchronized with the color modulation (encoding) at the transmitter. The output of the synchronized 3.58 MHz oscillator 36 is also doubled by a frequency doubler 38 and then applied through a driver 39 to electrostatic deflection plates 40 in order to synchronously modulate the electron beam of the picture tube 31 as it is scanned 525 lines per frame by the yoke 22. The deflection plates, or equivalent auxiliary deflection coils, are aligned with the vertical deflection of the yoke 22. In that manner, the same line scan modulation pattern of the camera is synchronously repeated at the picture tube for the desired increase in vertical resolution. Synchronization is achieved through control of the phase of the color oscillator 36 at the display unit by the gated color burst. Since phase control of that oscillator is necessary for color demodulation, no penalty is incurred at the display unit. All that is necessary is a frequency doubler, electrostatic deflection plates (or auxiliary deflection coils), and a driver between the plates (or coils) and the frequency doubler. Note that the camera also requires only a frequency doubler, driver and plates (or coils). Everything else about the camera and display unit is the same as for a standard NTSC system.

If a color display unit is not equipped with a frequency doubler, driver and auxiliary deflection means (plates or coils), the program transmitted from a camera so equipped will be displayed with linear horizontal scan lines. In that sense, the invention is compatible with display units not adapted to display a program with increased vertical resolution.

Because of the dominance of the signal G in the luminance signal Y produced by a color encoder from a color television camera, it is possible to practise the HRT system by modulation of only the green pickup tube, as noted hereinbefore. The human eye would not notice that the red and blue camera tubes were not synchronously modulated when the color video is displayed by modulation of the television receiver in a corresponding way.

It is recognized that the HRT system will require greater bandwidth for transmission of the HRT information from the camera, or other source, to the receiver, or other display unit. For broadcast signals where channel bandwidth is limited, such as in the United States where the channel bandwidth is 6 MHz, within which a 4.2 MHz color subcarrier sideband must be contained. If the composite video signal having HRT information is band filtered, all of the HRT information will be lost, so the full potential of high resolution will not be achieved. In order to achieve the full potential, it is necessary to transmit the HRT information within the 4.2 MHz vestigial sideband of a broadcast signal. This is achieved by demodulating the luminance signal to obtain the HRT information, modulating a subcarrier of 1.2 MHz with the detected HRT information, and adding the modulated subcarrier with the Q color signal. In that way, the HRT information is transmitted within the 1.3 MHz bandwidth of the subcarrier signal, which is well within the 4.2 MHz total bandwidth. At the receiver, the procedure is essentially reversed; the HRT modulated subcarrier in the Q channel is detected in a balanced detector using a 1.2 MHz reference signal derived from the stable local color reference oscillator 36, and the detected HRT signal is then modulated by the output of the frequency doubler 38 and added to the Y signal. The circuitry to be added to the camera, or other signal source, and the receiver, or other display unit, will now be described with reference to FIGs. 5 and 6.

Referring to FIG. 5, the Y signal with HRT information from the color encoder 17 (FIG. 1) is first synchronously detected using the 7.2 MHz output of the frequency doubler 20 in a balanced detector 50. The 7.2 MHz reference signal, which is actually 7.15909, is divided by six in a frequency divider 51 to provide a signal at 1.1931816 MHz (hereinafter referred to as 1.2 MHz). The 1.2 MHz signal is first modulated with the HRT information in a balanced modulator 52, and then passed through a 1.5 MHz bandpass filter 53. Thereafter, using the phase of the color subcarrier oscillator 18 as a reference, with a phase adjustment made in a variable phase delay unit 54, the output of the filter 53 is phase modulated in a balanced modulator 55 to correspond with the phase of the Q color signal. The result is then added to the 0.5 MHz Q color signal in an adder 56, such as a summing amplifier, to provide a Q' signal comprised of the HRT information modulated onto the 1.2 MHz subcarrier and the Q color signal. The Y, I, Q' and color subcarrier bursts then constitute the composite video of the HRT system sent to the transmitter.

At the receiver the 3.58 MHz color reference from the local oscillator 36 (FIG. 2) is divided by three in a frequency divider 60 to obtain a 1.2 MHz reference signal as shown in FIG. 6. That reference signal is then used to synchronously detect the HRT information signal in the output of the 1.2 MHz bandpass filter 33a of the color demodulator 33 using a balanced detector 61. A bandpass filter 33b passes the narrow band (0.5 MHz) Q signal to a balanced demodulator 33c which decodes the I and Q signal. What distinguishes HRT information from chrominance information in the output of the bandpass filter 33a is the phase, so that the balanced demodulator 33c passes only the I signal, and not the HRT information, along with the Q information.

In actuality, the balanced demodulator 33c is comprised of two demodulators, one for the I and one for the Q signal.

The decoded I and Q signals are transmitted to a color matrix which converts them into the primary color signals R, G and B. The HRT information detected in the balanced detector 61 is modulated by the 7.2 MHz signal from the frequency doubler 38 (FIG. 2) using a balanced modulator 62. The HRT information signal modulated by the 7.2 MHz signal is then combined with the Y signal in an adder 63. The HRT information removed from the Y signal at the transmitter by a bandpass filter is thus restored to the Y signal at the receiver for high resolution display using the 7.2 MHz signal from the frequency doubler 38 to modulate the vertical scan of the display unit (CRT 31 as shown in FIG. 2.)

Each balanced modulator and balanced demodulator referred to herein is a commercially available integrated circuit, such as an MC 1496G, designed for use where the output signal (voltage) is a product of an input signal and reference (carrier) signal. Full wave balanced multiplication of the two input voltages occurs, and the output is a dc constant times the product of the two signals, so the output will consist of only the sum and difference of the two input signal frequencies. Thus the circuit may be used as a balanced modulator or detector.

The general technique of modulating line scan of a color camera or other television signal source and synchronously modulating line scan of a display unit can be practiced with other equipment and other standards, such as PAL and SECAM. The manner of synchronizing the modulation at

- 15 -

0176360

the display unit with the camera modulation can also be varied to use any technique for transmitting from the camera a signal that may be used by the display unit for controlling the phase and frequency of a local oscillator in the display unit.

This general technique increases vertical resolution by increasing video information in the vertical direction, but since each scan line will now include more picture elements (pixels), it will increase horizontal resolution as well. Thus, for a standard display unit not equipped to vertically modulate the horizontal scans, horizontal resolution is improved.

Vertical modulation of the horizontal scan at the camera will not only increase the video information, but also increase the bandwidth of the video signal. This is a direct result of the greater velocity of the electron beam on the target surface. Consequently, to achieve the full potential for increased resolution in both the vertical axis and the horizontal axis where it is not possible to use a channel of greater bandwidth, it is necessary to effectively increase the bandwidth of the transmission channel to the display unit in accordance with the present invention. However, in some applications or locales, it may be possible to actually increase the transmission channel bandwidth, such as to twice the normal broadcast channel of 6 MHz.

Although a particular embodiment of the invention has been described and illustrated herein, with reference to the application of the invention to television broadcasting to a receiver, it is recognized that the invention is suitable for other applications, such as large screen video display, since the video display equipment functions as a unit like a television monitor or receiver in response to the same signals, and such signals might be recorded on tape rather than transmitted. This is particularly true where the video signal source is a film-to-tape converter rather than a television camera. Consequently, it is intended that the claims be interpreted to cover such equivalent video signal sources and equivalent display units.

Claims

1.  A method of improving vertical resolution of a composite video signal in a color television system comprised of a video signal source and a display unit, which video signal comprises chrominance signals I and Q encoded by modulation with a color subcarrier frequency at 0° and 90°, produced by said source frame by frame, comprising the steps of

modulating the vertical beam deflection of said source while producing said video signal for each line of a frame, said modulation having a frequency sufficient for causing each line scanned to undulate about the normal straight line scan a significant number of cycles,

modulating the vertical scan of said display unit with the same phase and relative amplitude as the modulation of said video signal for display of each line of a frame in the same pattern as scanned by said camera, wherein said composite video signal is transmitted to said display unit as said I color encoded signal of 1.3 MHz bandwidth and 0° phase, and said Q color encoded signal with 0.5 MHz bandwidth and 90° phase with respect to said color subcarrier used for color encoding signals of primary colors, red, green, and blue, said I and Q signals being transmitted through a filter of bandpass less than said frequency of modulation, thereby removing high resolution information from the video signal which is transmitted to said display unit together with information for synchronizing the modulation of said display unit with the same effect of modulation as said source in producing said video signal,

detecting said high resolution information to be transmitted to said display unit using said frequency of modulation as a reference,

remodulating said high resolution information thus detected with a signal in phase with said color subcarrier at a frequency within said 1.3 MHz bandwidth, but significantly greater than said 0.5 MHz bandwidth,

adding said high resolution information thus remodulated to said Q signal to produce a signal Q' before forming a composite video signal with said I and Y signals for transmission to said display unit,

at said display unit, bandpass filtering said composite video signal to produce 0.5 MHz and 1.3 MHz bandpass filtered signals, thereby separating the Q chrominance signal and the I chrominance signal for synchronous demodulation with said color subcarrier frequency, thereby producing a signal component at said frequency within said I signal bandwidth and zero phase with respect to the color carrier as a result of the 1.3 MHz bandpass filtering for the I chrominance signal,

synchronously detecting the high resolution information in said signal component using a reference signal at the frequency and phase of the modulation, and

remodulating the detected high resolution information at said display unit with a signal of the same frequency and phase as the modulation of the vertical scan.

0176360

2.    A   color television system comprising    a video signal source and a display unit, and apparatus for improving vertical resolution of a composite video signal comprised of chrominance signals I and Q encoded by modulation with a color subcarrier frequency at 0° and 90°, produced by said source frame by frame, comprising

means for  modulating the vertical beam deflection of said source while producing said video signal for each line of a frame, said modulation having a frequency sufficient for causing each line scanned to undulate about the normal straight line scan a significant number of cycles,

means for modulating the vertical scan of said display unit with the same phase and relative amplitude as the modulation of said video signal for display of each line of a frame in the same pattern as scanned by said camera,

means for transmitting said composite video signal to said display unit as said I color encoded signal of 1.3 MHz bandwidth and 90° phase, and said Q color encoded signal with 0.5 MHz bandwidth and 0° phase with respect to said color subcarrier used for color encoding signals of primary colors, red, green, and blue, said I and Q signals being transmitted through a filter of bandpass less than said frequency of modulation, thereby removing high resolution information from the video signal transmitted to said display unit together with information for synchronizing the modulation of said display unit with the same effect of modulation as said source in producing said video signal,

means for detecting said high resolution information to be transmitted to said display unit using said frequency of modulation as a reference,

means for remodulating said high resolution information thus detected with a signal in phase with said color subcarrier at a frequency within said 1.3 MHz bandwidth, but significantly greater than said 0.5 MHz bandwidth,

means for adding said high resolution information thus remodulated to said Q signal to produce a signal Q' before forming a composite video signal with said I and Y signals for transmission to said display unit,

means at said display unit for bandpass filtering said composite video signal to produce 0.5 MHz and 1.3 MHz bandpass filtered signals, thereby separating the Q chrominance signal and the I chrominance signal for synchronous demodulation with said color subcarrier, thereby producing a signal component at 1.2 MHz and zero phase with respect to the color carrier as a result of the 1.3 MHz bandpass filtering for the I chrominance signal,

means for synchronously detecting the high resolution information in said signal component using a reference signal at the frequency and phase of the modulation, and

means for remodulating the detected high resolution information at said display unit with a signal of the same frequency and phase as the modulation of the vertical scan.

15J149-000

3. A color television system comprising a video signal source and a display unit and apparatus for improving vertical resolution of a composite video signal comprised of chrominance signals encoded by quadrature modulation of a color subcarrier frequency, produced by said source frame by frame, comprising

means for modulating the vertical beam deflection of said source while producing said video signal for each line of a frame, said modulation having a frequency sufficient for causing each line scanned to undulate about the normal straight line scan a significant number of cycles,

means for modulating the vertical scan of said display unit with the same phase and relative amplitude as the modulation of said source for display of each line of a frame in the same pattern as scanned by said source,

means for transmitting said composite video signal to said display unit as chrominance signals used for color encoding signals of primary colors, red, green, and blue, said chrominance signals being transmitted through a filter of bandpass less than said frequency of modulation, thereby removing high resolution information from the video signal which is transmitted to said display unit together with information for synchronizing the modulation of said display unit with the same effect of modulation as said source in producing said video signal,

means for detecting said high resolution information to be transmitted to said display unit using said frequency of modulation as a reference,

means for remodulating said high resolution information thus detected with a signal synchronised with said color subcarrier but of a frequency lower than the color subcarrier frequency and higher than the bandwidth of at least one of the chrominance signals,

means for adding said high resolution information thus remodulated to the chrominance and luminance signals to form a composite video signal for transmission to said display unit,

means at said display unit for bandpass filtering said composite video signal to produce bandpass filtered signals, thereby separating the chrominance signals for synchronous demodulation with said color subcarrier frequency, thereby producing a signal component containing high resolution information,

means for synchronously detecting the high resolution information in said signal component using a reference signal at the frequency and phase of the remodulation, and

means for remodulating the detected high resolution information at said display unit with a signal of the same frequency and phase as the modulation of the vertical scan.

FIG. 1 (PRIOR ART)

FIG. 2 (PRIOR ART)

FIG. 3

FIG. 4

3/3

FIG. 5

FIG. 6